Europäisches Patentamt

European Patent Office

Office européen des brevets

(19)

(11) Veröffentlichungsnummer: **0 104 318**
**B1**

(12) **EUROPÄISCHE PATENTSCHRIFT**

(45) Veröffentlichungstag der Patentschrift:
**17.09.86**

(51) Int. Cl.⁴: **F 16 K 31/60**

(21) Anmeldenummer: **83105647.8**

(22) Anmeldetag: **09.06.83**

(54) **Betätigungseinrichtung für eine Armatur.**

(30) Priorität: **24.09.82 DE 3235320**

(43) Veröffentlichungstag der Anmeldung:
**04.04.84 Patentblatt 84/14**

(45) Bekanntmachung des Hinweises auf die Patenterteilung:
**17.09.86 Patentblatt 86/38**

(84) Benannte Vertragsstaaten:
**AT BE CH FR IT LI LU NL SE**

(56) Entgegenhaltungen:
**DE - C - 383 388**
**DE - U - 7 017 237**
**DE - U - 7 706 304**
**US - A - 3 035 452**

(73) Patentinhaber: **Klein, Schanzlin & Becker Aktiengesellschaft, Johann-Klein-Strasse 9, D-6710 Frankenthal (DE)**

(72) Erfinder: **Ruckert, Heinz-Jürgen, Friedensstrasse 21, D-6711 Grossniedesheim (DE)**

(74) Vertreter: **Furkert, Diethelm, Klein, Schanzlin & Becker Aktiengesellschaft, PFL Postfach 225, D-6710 Frankenthal (DE)**

EP 0 104 318 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Betätigungseinrichtung für eine Armatur, bei der das Verschlussstück in einer Schwenkbewegung geführt wird, mit einem auf der Spindel der Armatur befestigten Handhebel und einem am Handhebel angeordneten, gegenüber diesem gegen den Druck einer Feder um eine Drehachse verschwenkbaren Rastgriff, der zur Fixierung von Zwischenstellungen in einer am Gehäuse der Armatur angeordneten, mit einer Mehrzahl von Ausnehmungen versehenen Rastscheibe zum Eingriff zu bringen ist.

Eine solche Betätigungseinrichtung ist bekannt durch das DE-U- 7706 304. Die Bewegungsrichtung des Rastgriffes dieser Ausführung liegt radial zur Strömungsrichtung. Die Drehachsen des Rastgriffes und der Klappenscheibe stehen senkrecht zueinander. Der Rastgriff kann von den Klappendrehkräften nicht angehoben werden, der Trieb ist selbsthemmend.

Diese Anordnung hat aber einen wesentlichen Nachteil. Es besteht nämlich die Möglichkeit, dass man bei der Betätigung des Rastgriffes mit der Rohrleitung in Berührung kommt. Da derartige Armaturen für bis zu 140 °C heisse Durchflussmedien eingesetzt werden, ist ein Verbrennen der Finger nicht ausgeschlossen. Bei Rohrleitungen und Armaturen, die, gemäss einer vielfach gegebenen Vorschrift, mit dicken Isoliermänteln versehen sind, kann dagegen der Raum für die Betätigung des Rastgriffes sehr eng werden.

Der Erfindung liegt die Aufgabe zugrunde, eine Betätigungseinrichtung für eine Armatur zu schaffen, deren Rastgriff ohne die Gefahr einer Berührung der Rohrleitung und ohne eine Beengung durch mögliche Isolationen zu betätigen ist.

Die gestellte Aufgabe wird bei einer Betätigungseinrichtung der eingangs genannten Art gelöst durch einen Rastgriff, dessen Drehachse parallel zur Drehachse der Armatur versetzt ist, wobei der Rastgriff mit zwei Zähnen versehen ist, die in der Raststellung an entgegengesetzten Flanken der Ausnehmungen der Rastscheibe anliegen, wobei die Neigungswinkel der Flanken und der Zähne derart sind, dass die an den Eingriffsstellen wirkenden Kräfte Momente erzeugen, die in beiden Drehrichtungen ein Hineindrehen des Rastgriffes in die Ausnehmungen der Rastscheibe bewirken.

Die Erfindung hatte zu berücksichtigen, dass die blosse Verlegung der Drehachse des Rastgriffes noch nicht den gewünschten Erfolg bringen konnte. Die Beibehaltung nur eines Zahnes am Rastgriff hätte nämlich dazu geführt, dass der Handhebel nur in einer der beiden Betätigungsrichtungen blockiert worden wäre, in der anderen Richtung aber durch eine allein auf den Handhebel wirkende Kraft aus seiner Raststellung herausgezogen worden wäre. Dies hätte sich lediglich durch eine hohe, auf den Rastgriff wirkende Federkraft kompensieren lassen. Hierdurch wäre aber eine unnötig hohe Betätigungskraft beim Ausklinken notwendig geworden.

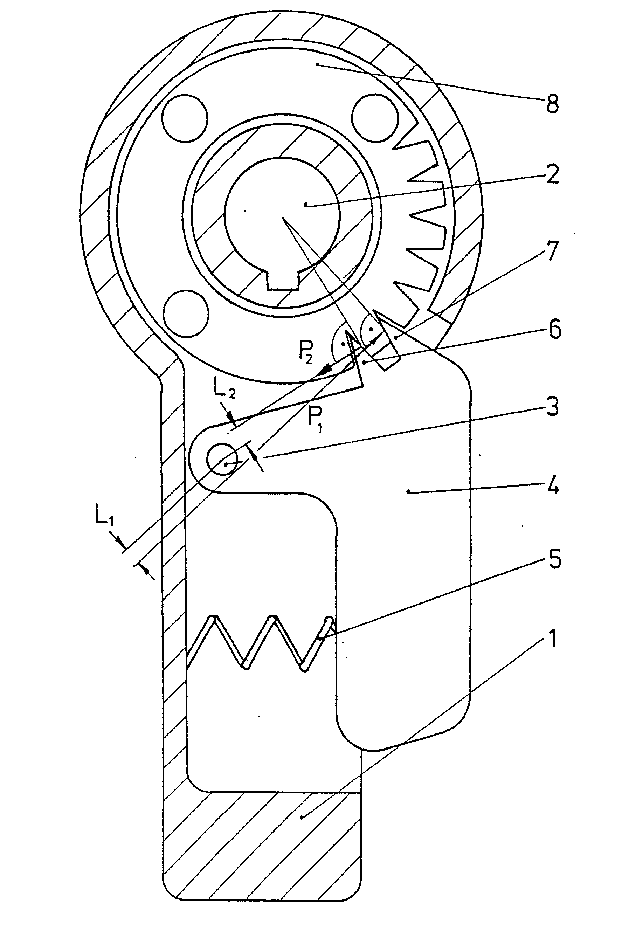

Die der Erfindung zugrundeliegende Überlegung geht davon aus, dass bei gleichzeitigem Eingriff von zwei Zähnen die Anordnung in beiden Drehrichtungen selbsthemmend sein muss. In dem in der Zeichnung dargestellten Ausführungsbeispiel wird dies verdeutlicht.

Die Zeichnung zeigt die Draufsicht auf eine teilweise im Schnitt dargestellte Betätigungseinrichtung gemäss der Erfindung. Ein Handhebel 1 ist auf der Spindel 2 einer Armatur angeordnet. Innerhalb des Handhebels 1 befindet sich der um eine Drehachse 3 verschwenkbare Rastgriff 4. Durch eine Feder 5 wird der Rastgriff 4 abgestützt. Die Feder 5 ist für die Hemmung nicht erforderlich; sie dient lediglich dazu, die Schwerkraft des Rastgriffes 4 zu kompensieren, falls dieser in einer Lage eingebaut ist, in der ihn die Schwerkraft aus der Verzahnung herausziehen würde. Ausserdem sorgt die Feder 5 für die notwendige Einfädelkraft nach dem Loslassen des Rastgriffes 4.

Der Rastgriff 4 ist mit Zähnen 6 und 7 versehen, die mit einer Mehrzahl von entsprechend geformten Ausnehmungen in einer Rastscheibe 8 zusammenwirken, die am Gehäuse der – nicht dargestellten – Armatur befestigt ist.

Die selbsthemmende Wirkung am Eingriff des Rastgriffes 4 in die Rastscheibe 8 kommt folgendermassen zustande:

Die an der Eingriffsstelle wirkende Kraft $P_1$ erzeugt bei einer Drehung des Handhebels 1 im Uhrzeigersinn ein Moment $T_1 = P_1 \times L_1$. Die bei einer Drehung des Handhebels 1 entgegen dem Uhrzeigersinn wirkende Kraft $P_2$ erzeugt ein Moment $T_2 = P_2 \times L_2$. Beide Momente bewirken ein Drehen des Rastgriffes 4 in die Ausnehmungen der Rastscheibe 8 hinein, also eine Selbsthemmung.

## Patentanspruch

1. Betätigungseinrichtung für eine Armatur, bei der das Verschlussstück in einer Schwenkbewegung geführt wird, mit einem auf der Spindel (2) der Armatur befestigten Handhebel (1) und einem am Handhebel (1) angeordneten, gegenüber diesem gegen den Druck einer Feder (5) um eine Drehachse (3) verschwenkbaren Rastgriff (4), der zur Fixierung von Zwischenstellungen in einer am Gehäuse der Armatur angeordneten, mit einer Mehrzahl von Ausnehmungen versehenen Rastscheibe (8) zum Eingriff zu bringen ist, gekennzeichnet durch einen Rastgriff (4), dessen Drehachse (3) parallel zur Drehachse der Armatur (2) versetzt ist, wobei der Rastgriff (4) mit zwei Zähnen (6, 7) versehen ist, die in der Raststellung an entgegengesetzten Flanken der Ausnehmungen der Rastscheibe (8) anliegen, wobei die Neigungswinkel der Flanken und der Zähne (6, 7) derart sind, dass die an den Eingriffsstellen wirkenden Kräfte ($P_1$ und $P_2$) Momente erzeugen, die in beiden Drehrichtungen ein Hineindrehen des Rastgriffes (4) in die Ausnehmungen der Rastscheibe (8) bewirken.

## Claim

1. An actuating device for a pipe fitting, in the case of which the valve member is guided for pivotal motion, comprising a hand lever (1) attached to the screw threaded drive rod (2) of the said fitting, and a detend handle (4) which is mounted on the hand lever (1) and is able to be pivoted in relation thereto against the force of a spring (5) about an axis of turning (3), said detent handle (4) being adapted to be brought into engagement with a detent disk (8) for adjustment to intermediate settings, said disk (8) being arranged on the housing of said fitting and having a plurality of recesses, characterized by a detent handle (4) whose axis (3) of turning is offset parallel to the axis of turning of the said fitting (2), and the detent handle (4) is provided with two teeth (6 and 7), which in the locking position rest on opposite sides of the recesses in the detent disk (8) and the angles of slope of the sides and of the teeth (6 and 7) are such that the forces ($P_1$ and $P_2$) effective at the points of engagement produce moments which in both directions of turning lead to an inward rocking of the detent handle (4) into the recesses of the detent disk (8).

## Revendication

1. Système de commande d'une armature sur lequel le dispositif de fermeture est entraîné dans un mouvement pivotant, comportant un levier à main (1) fixé sur la broche (2) de l'armature et une poignée à crans (4) fixée sur le levier à main (1), en face de celui-ci à contre pression d'un ressort (5), pivotant autour d'un axe de rotation (3) et engrenée afin de fixer des positions intermédiaires sur un disque d'arrêt (8) disposé sur le corps de la robinetterie, muni d'un certain nombre de creux, caractérisé par une poignée à crans (4) dont l'axe de rotation (3) est placé parallèlement à l'axe de rotation (3) est placé parallèlement à l'axe de rotation de l'armature (2). La poignée à crans (4) est dotée de deux dents (6, 7) qui, en position de crantage, portent sur les flancs opposés des creux du disque d'arrêt (8), l'angle d'inclinaison des flancs et des dents (6, 7) est tel que les forces qui s'exercent aux positions d'engrènement ($P_1$ et $P_2$) créent des moments qui entraînent dans les deux sens de rotation une insertion rotatoire de la poignée à crans (4) dans les creux du disque d'arrêt (8).

1/1

8

2

7

6

P₂

3

L₂

P₁

4

L₁

5

1

5